# EUROPEAN PATENT APPLICATION

(11) **EP 4 648 347 A1**
(43) Date of publication of application: **12.11.2025**
(21) Application number: 25196642.0
(22) Date of filing: 09.01.2019
(51) Int. Cl.: H04L 5/00

(54) **NETWORK ACCESS NODE AND CLIENT DEVICE FOR INDICATION OF MULTIPLE DATA CHANNELS IN A SINGLE CONTROL MESSAGE**

(62) Divisional of application: 19700271.0
(71) Applicant: Huawei Technologies Co., Ltd., Shenzhen, Guangdong 518129 (CN)
(72) Inventor: LINDOFF, Bengt, 16440 Kista (SE); HU, Wenquan, 16440 Kista (SE); SCHIER, Thorsten, 16440 Kista (SE); PAPADIMITRIOU, Panayiotis, 16440 Kista (SE); TUMULA, Chaitanya, 16440 Kista (SE)
(74) Representative: Gill Jennings & Every LLP

(57) **Abstract**

The invention relates to for indication of multiple data channels in a single control message. A network access node (100) transmits a control message (502) to a client device (300). The control message (502) comprises a first control information (504) associated with a first data channel (510) and a second control information (506) associated with a second data channel (512). The first data channel (510) and the second data channel (512) do not overlap in frequency. The network access node (100) further concurrently transmit a first data packet (D1) in the first data channel (510) and a second data packet (D2) in the second data channel (512) to the client device (300). Furthermore, the invention also relates to the client device (300), corresponding methods, and a computer program.

## Description

### Technical Field

The invention relates to a network access node and a client device for indication of multiple data channels in a single control message. Furthermore, the invention also relates to corresponding methods and a computer program.

### Background

In new radio (NR), the physical downlink control channel (PDCCH) carries downlink control information (DCI) to the user equipment (UE). The DCI indicates where physical downlink shared channel (PDSCH) resources for the UE are allocated. When a next generation NodeB (gNB) has a data packet to transmit to a UE, the gNB allocates PDSCH resources to the UE and sends in PDCCH a DCI indicating the PDSCH resources to the UE. If the UE does not detect the DCI, the UE will not transmit an ACK/NACK for the data packet. The gNB determines that no ACK/NACK has been received and performs a retransmission of the data packet. If the UE detects the DCI but fails to decode the PDSCH, a NACK is sent. The gNB receives the NACK and performs a retransmission of the data packet. In both these failure cases, the retransmission introduces a time delay. This time delay may be critical for e.g. ultra reliable and low latency communication (URLLC) services.

### Summary

An objective of embodiments of the invention is to provide a solution which mitigates or solves the drawbacks and problems of conventional solutions.

The above and further objectives are solved by the subject matter of the independent claims. Further advantageous embodiments of the invention can be found in the dependent claims.

According to a first aspect of the invention, the above mentioned and other objectives are achieved with a network access node for a wireless communication system, the network access node being configured to
transmit a control message to a client device, wherein the control message comprises a first control information associated with a first data channel and a second control information associated with a second data channel, wherein the first data channel and the second data channel do not overlap in frequency;
concurrently transmit a first data packet in the first data channel and a second data packet in the second data channel to the client device.

That the first data channel and the second data channel do not overlap in frequency can in this disclosure be understood to mean that the first data channel is on a first set of frequency resources and the second data channel is on a second set of frequency resources which is different/separated from the first set of frequency resources, i.e. none of the frequencies in the second set of frequency resources are included in the first set of frequency resources.

An advantage of the network access node according to the first aspect is that the first and second data packets can be transmitted during a short time period and hence low latency in data packet transmissions can be achieved.

In an implementation form of a network access node according to the first aspect, concurrently transmit the first data packet and the second data packet to the client device comprises
transmit the first data packet and the second data packet in a common slot of the first data channel and the second data channel, respectively.

An advantage with this implementation form is that the first and second data packets can be transmitted during one slot and hence low latency in packet transmissions can be achieved.

In an implementation form of a network access node according to the first aspect, concurrently transmit the first data packet and the second data packet to the client device comprises
transmit the first data packet in the first data channel in a first time period and transmit the second data packet in the second data channel in a second time period, wherein the first time period and the second time period at least partially overlap in time.

An advantage with this implementation form is that two data packets can be transmitted during a shorter time period compared to the case of transmission with non-overlap as in conventional solutions. Hence, low latency in packet transmissions can be achieved.

In an implementation form of a network access node according to the first aspect, the first control information comprises more bits than the second control information.

An advantage with this implementation form is that the total number of information bits needed to indicate the first and second control information can be made more compact implying reduced overhead in the system. Further, resources allocated for control signalling can instead be used for more robust coding increasing the reliably of control signalling in respect of the first and second data channels.

In an implementation form of a network access node according to the first aspect, the second control information is derivable from the first control information.

An advantage with this implementation form is that second control information will be easy to interpret by the client device implying low complexity. Also, lower overhead is achieved.

In an implementation form of a network access node according to the first aspect, the second control information is derivable from the first control information in dependence on an offset value.

An advantage with this implementation form is that second control information will be easy to interpret by the client device implying low complexity. Also, lower overhead is achieved.

In an implementation form of a network access node according to the first aspect, the second control information is derivable from the first control information in dependence on a look up table.

An advantage with this implementation form is that second control information will be easy to interpret by the client device implying low complexity. Also, lower overhead is achieved.

In an implementation form of a network access node according to the first aspect, the control message is a single downlink control information comprising a plurality of fields, and wherein the first control information and the second control information are comprised in the same field.

An advantage with this implementation form is that the total number of information bits to indicate the first and second control information can be reduced meaning lower overhead.

In an implementation form of a network access node according to the first aspect, the control message is a single downlink control information comprising a plurality of fields, and wherein the first control information and the second control information are comprised in different fields.

An advantage with this implementation form is that generally the first and second control information can be indicated with more information bits compared to the case when the first and second control information are comprised in the same field of the downlink control information.

In an implementation form of a network access node according to the first aspect, the first control information and the second control information are data channel configuration information.

An advantage with this implementation form is that since data channel configuration information is sent to the client device, data decoding at the client device can be made faster and more reliable.

In an implementation form of a network access node according to the first aspect, the data channel configuration information is at least one of frequency resource, time resource, code resource, redundancy version, modulation and coding scheme, transport block, and bandwidth part allocation.

An advantage with this implementation form is that the data channel configuration information gives specific information about the data channel configuration for the client device.

In an implementation form of a network access node according to the first aspect, the control message further comprises a third control information associated with the first data channel and the second data channel.

An advantage with this implementation form is that the same control information is sent for the first and second data channels thereby reducing overhead in the system.

In an implementation form of a network access node according to the first aspect, the first data packet and the second data packet comprises the same information content.

That the first data packet and the second data packet comprise the same information content can e.g. mean that same information content can be sent with different redundancy versions or different modulation or coding in respective first and second data packet.

An advantage with this implementation form is the latency of the data packet transmissions can be reduced and at the same time increasing the decoding reliability of the information content due to redundant transmissions.

According to a second aspect of the invention, the above mentioned and other objectives are achieved with a client device for a wireless communication system, the client device being configured to
receive a control message from a network access node, wherein the control message comprises a first control information associated with a first data channel and a second control information associated with a second data channel, wherein the first data channel and the second data channel do not overlap in frequency;
concurrently receive a first data packet in the first data channel and a second data packet in the second data channel from the network access node.

An advantage of the client device according to the second aspect is that the first and second data packets can be received during a short time period and hence low latency in data packet transmissions can be achieved.

In an implementation form of a client device according to the second aspect, the client device is further configured to
decode the first data channel according to the first control information and decode the second data channel according to the second control information so as to obtain the first data packet and the second data packet, respectively.

In an implementation form of a client device according to the second aspect, concurrently receive the first data packet and the second data packet from the network access node comprises
receive the first data packet and the second data packet in a common slot of the first data channel and the second data channel, respectively.

An advantage with this implementation form is that the first and second data packets can be received during one slot and hence low latency in packet transmissions can be achieved.

In an implementation form of a client device according to the second aspect, concurrently receive the first data packet and the second data packet from the network access node comprises

receive the first data packet in the first data channel in a first time period and receive the second data packet in the second data channel in a second time period, wherein the first time period and the second time period at least partially overlap in time.

An advantage with this implementation form is that two data packets can be transmitted during a shorter time period compared to the case of transmission with non-overlap as in conventional solutions. Hence, low latency in packet transmissions can be achieved.

In an implementation form of a client device according to the second aspect, the first control information comprises more bits than the second control information.

An advantage with this implementation form is that the total number of information bits needed to indicate the first and second control information can be made more compact implying reduced overhead in the system. Further, resources allocated for control signalling can instead be used for more robust coding increasing the reliably of control signalling in respect of the first and second data channels.

In an implementation form of a client device according to the second aspect, the client device is further configured to
derive the second control information from the first control information.

An advantage with this implementation form is that second control information will be easy to interpret by the client device implying low complexity. Also, lower overhead is achieved.

In an implementation form of a client device according to the second aspect, the client device is further configured to
derive the second control information from the first control information in dependence on an offset value.

An advantage with this implementation form is that second control information will be easy to interpret by the client device implying low complexity. Also, lower overhead is achieved.

In an implementation form of a client device according to the second aspect, the client device is further configured to
derive the second control information from the first control information in dependence on a look up table.

An advantage with this implementation form is that second control information will be easy to interpret by the client device implying low complexity. Also, lower overhead is achieved.

In an implementation form of a client device according to the second aspect, the control message is a single downlink control information comprising a plurality of fields, and wherein the first control information and the second control information are comprised in the same field.

An advantage with this implementation form is that the total number of information bits to indicate the first and second control information can be reduced meaning lower overhead.

In an implementation form of a client device according to the second aspect, the control message is a single downlink control information comprising a plurality of fields, and wherein the first control information and the second control information are comprised in different fields.

An advantage with this implementation form is that generally the first and second control information can be indicated with more information bits compared to the case when the first and second control information are comprised in the same field of the downlink control information.

In an implementation form of a client device according to the second aspect, the first control information and the second control information are data channel configuration information.

An advantage with this implementation form is that since data channel configuration information is sent to the client device, data decoding at the client device can be made faster and more reliable.

In an implementation form of a client device according to the second aspect, the data channel configuration information is at least one of frequency resource, time resource, code resource, redundancy version, modulation and coding scheme, transport block, and bandwidth part allocation.

An advantage with this implementation form is that the data channel configuration information gives specific information about the data channel configuration for the client device.

In an implementation form of a client device according to the second aspect, the control message further comprises a third control information associated with the first data channel and the second data channel.

An advantage with this implementation form is that the same control information is sent for the first and second data channels thereby reducing overhead in the system.

In an implementation form of a client device according to the second aspect, the first data packet and the second data packet comprises the same information content.

An advantage with this implementation form is the latency of the data packet transmissions can be reduced and at the same time increasing the decoding reliability of the information content due to redundant transmissions.

According to a third aspect of the invention, the above mentioned and other objectives are achieved with a method for a network access node, the method comprises
transmitting a control message to a client device, wherein the control message comprises a first control information associated with a first data channel and a second control information associated with a second data channel, wherein the first data channel and the second data channel do not overlap in frequency;
concurrently transmitting a first data packet in the first data channel and a second data packet in the second data channel to the client device.

The method according to the third aspect can be extended into implementation forms corresponding to the implementation forms of the network access node according to the first aspect. Hence, an implementation form of the method comprises the feature(s) of the corresponding implementation form of the network access node.

The advantages of the methods according to the third aspect are the same as those for the corresponding implementation forms of the network access node according to the first aspect.

According to a fourth aspect of the invention, the above mentioned and other objectives are achieved with a method for a client device, the method comprises
receiving a control message from a network access node, wherein the control message comprises a first control information associated with a first data channel and a second control information associated with a second data channel, wherein the first data channel and the second data channel do not overlap in frequency;
concurrently receiving a first data packet in the first data channel and a second data packet in the second data channel from the network access node.

The method according to the fourth aspect can be extended into implementation forms corresponding to the implementation forms of the client device according to the second aspect. Hence, an implementation form of the method comprises the feature(s) of the corresponding implementation form of the client device.

The advantages of the methods according to the fourth aspect are the same as those for the corresponding implementation forms of the client device according to the second aspect.

The invention also relates to a computer program, characterized in program code, which when run by at least one processor causes said at least one processor to execute any method according to embodiments of the invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the embodiments of the invention will be apparent from the following detailed description.

### Brief Description of the Drawings

The appended drawings are intended to clarify and explain different embodiments of the invention, in which:
- Fig. 1 shows a network access node according to an embodiment of the invention;
- Fig. 2 shows a method for a network access node according to an embodiment of the invention;
- Fig. 3 shows a client device according to an embodiment of the invention;
- Fig. 4 shows a method for a client device according to an embodiment of the invention;
- Fig. 5 shows a wireless communication system according to an embodiment of the invention;
- Fig. 6 shows a control message according to an embodiment of the invention;
- Fig. 7 shows concurrent transmission according to an embodiment of the invention;
- Fig. 8 shows concurrent transmission according to an embodiment of the invention.

### Detailed Description

To enhance the PDCCH reliability, it has been proposed to introduce PDCCH repetition. With PDCCH repetition, the same DCI is transmitted at two different resources, in time or preferably in frequency, in the PDCCH. The UE can by multiple decoding or soft combining of the PDCCH repetitions increase the reliability of the PDCCH decoding. However, if PDSCH decoding fails there is still a latency issue since a retransmission in time is needed. Hence, it would be desirable to be able to perform PDSCH repetition, similar to the PDCCH repetition, where the PDSCH is repeated substantially in the same time but on different frequency resources.

R1-1812256 mentions the possibility to transmit the same transport block from two different transmission and reception points (TRPs) for multi-TRP transmission with ideal backhaul. In this case, a single PDCCH schedules a single PDSCH where separate layers are transmitted from separate TRPs. In order to support soft combining, different revision versions can be indicated for these repeated transport blocks. Since it is ideal backhaul, two repeated transport blocks can be scheduled by a single PDCCH. In order to further enhance reliability, those two repeated transport blocks can also be scheduled by repeated PDCCHs.

NR further supports downlink aggregation factor. If configured, a gNB can send different redundancy versions (RV) of a transport block in successive slots with a single DCI, see 3GPP 38.214, section 5.1.2.1. Thus, the downlink aggregation factor feature makes it possible to perform PDSCH repetition of different revision versions on same frequency but in different slots. This will introduce latency which may cause significant problems for URLLC services.

Consequently, the current DCI design in long time evolution (LTE) or NR does not provide a way to indicate multiple data channels in a single DCI. The objective of the invention is therefore to provide a new efficient DCI design capable of indicating multiple data channels.

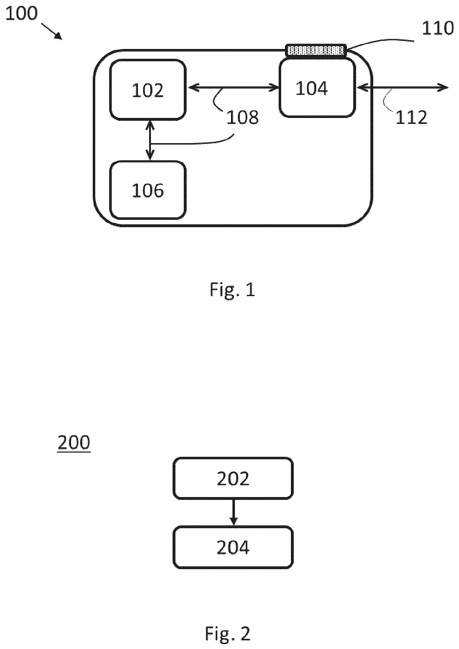

Fig. 1 shows a network access node 100 according to an embodiment of the invention. In the embodiment shown in Fig. 1, the network access node 100 comprises a processor 102, a transceiver 104 and a memory 106. The processor 102 is coupled to the transceiver 104 and the memory 106 by communication means 108 known in the art. The network access node 100 may be configured for both wireless and wired communications in wireless and wired communication systems, respectively. The wireless communication capability is provided with an antenna or antenna array 110 coupled to the transceiver 104, while the wired communication capability is provided with a wired communication interface 112 coupled to the transceiver 104. That the network access node 100 is configured to perform certain actions can in this disclosure be understood to mean that the network access node 100 comprises suitable means, such as e.g. the processor 102 and the transceiver 104, configured to perform said actions.

According to embodiments of the invention the network access node 100 is configured to transmit a control message 502 to a client device 300. The control message 502 comprises a first control information 504 associated with a first data channel 510 and a second control information 506 associated with a second data channel 512, wherein the first data channel 510 and the second data channel 512 do not overlap in frequency. The network access node 100 is further configured to concurrently transmit a first data packet in the first data channel 510 and a second data packet in the second data channel 512 to the client device 300.

Fig. 2 shows a flow chart of a corresponding method 200 which may be executed in a network access node 100, such as the one shown in Fig. 1. The method 200 comprises transmitting 202 a control message 502 to a client device 300. The control message 502 comprises a first control information 504 associated with a first data channel 510 and a second control information 506 associated with a second data channel 512, wherein the first data channel 510 and the second data channel 512 do not overlap in frequency. The method 200 further comprises concurrently transmitting 204 a first data packet in the first data channel 510 and a second data packet in the second data channel 512 to the client device 300.

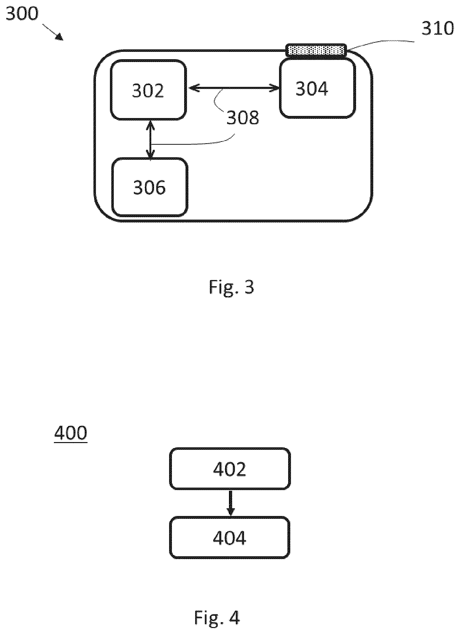

Fig. 3 shows a client device 300 according to an embodiment of the invention. In the embodiment shown in Fig. 3, the client device 300 comprises a processor 302, a transceiver 304 and a memory 306. The processor 302 is coupled to the transceiver 304 and the memory 306 by communication means 308 known in the art. The client device 300 further comprises an antenna or antenna array 310 coupled to the transceiver 304, which means that the client device 300 is configured for wireless communications in a wireless communication system. That the client device 300 is configured to perform certain actions can in this disclosure be understood to mean that the client device 300 comprises suitable means, such as e.g. the processor 302 and the transceiver 304, configured to perform said actions.

According to embodiments of the invention the client device 300 is configured to receive a control message 502 from a network access node 100. The control message 502 comprises a first control information 504 associated with a first data channel 510 and a second control information 506 associated with a second data channel 512, wherein the first data channel 510 and the second data channel 512 do not overlap in frequency. The client device 300 is further configured to concurrently receive a first data packet in the first data channel 510 and a second data packet in the second data channel 512 from the network access node 100.

Fig. 4 shows a flow chart of a corresponding method 400 which may be executed in a client device 300, such as the one shown in Fig. 3. The method 400 comprises receiving 402 a control message 502 from a network access node 100. The control message 502 comprises a first control information 504 associated with a first data channel 510 and a second control information 506 associated with a second data channel 512, wherein the first data channel 510 and the second data channel 512 do not overlap in frequency. The method 400 further comprises concurrently receiving 404 a first data packet in the first data channel 510 and a second data packet in the second data channel 512 from the network access node 100.

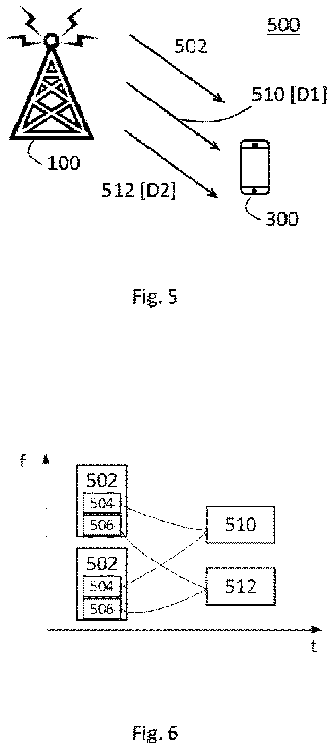

Fig. 5 shows a wireless communication system 500 according to an embodiment of the invention. The wireless communication system 500 comprises a network access node 100 and a client device 300 configured to operate in the wireless communication system 500. For simplicity, the wireless communication system 500 shown in Fig. 5 only comprises one network access node 100 and one client device 300. However, the wireless communication system 500 may comprise any number of network access nodes 100 and any number of client devices 300 without deviating from the scope of the invention.

In the wireless communication system 500, the network access node 100 transmit a control message 502 to the client device 300. The control message 502 according to the invention allows the network access node 100 to indicate control information associated with more than one data channel to the client device 100. The control message 502 may hence comprise a first control information 504 associated with a first data channel 510 and a second control information 506 associated with a second data channel 512, as shown in Fig. 6. The first data channel 510 and the second data channel 512 do not overlap in frequency, i.e. the frequency resources of the first data channel is different/separated from the frequency resources of the second data channel. Furthermore, the first data channel 510 and the second data channel 512 may be transmitted from a single transmission point in case only a single TRP exists or a respective transmission point in case of two TRPs available. The control message 502 may be transmitted in a control channel or in two different control channels if control channel repetitions is used. In the embodiment shown in fig. 6, the control message 502 is transmitted in two different control channels. As for the data channels, when two control messages 502 are used, the two control messages 502 may be transmitted from a single transmission point or a respective transmission point.

As shown in Fig. 5, the network access node 100 further concurrently transmit a first data packet D1 in the first data channel 510 and a second data packet D2 in the second data channel 512 to the client device 300 according to the control message 502. In embodiments, the first data packet D1 and the second data packet D2 comprises the same information content. The first data packet D1 and the second data packet D2 may e.g. be different redundancy versions of the same data packet.

The client device 300 receives the control message 502 from the network access node 100 and derives the first control information 504 associated with the first data channel 510 and the second control information 506 associated with the second data channel 512 from the control message 502. Based on the first control information 504 and the second control information 506, the client device 100 concurrently receives the first data packet D1 in the first data channel 510 and the second data packet D2 in the second data channel 512 from the network access node 100. The client device 300 may decode the first data channel 510 according to the first control information 504 and decode the second data channel 512 according to the second control information 506 so as to obtain the first data packet D1 and the second data packet D2, respectively. As described above, the first data packet D1 and the second data packet D2 may in embodiments comprise the same information content, e.g. be different redundancy versions of the same data packet.

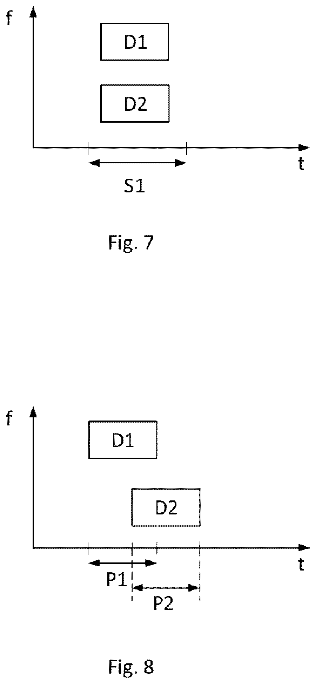

That the network access node 100 concurrently transmits the first data packet D1 and the second data packet D2 to the client device 300 may in one case mean that the network access node 100 transmits the first data packet D1 and the second data packet D2 in a common slot or transmission time interval (TTI) of the first data channel 510 and the second data channel 512, respectively. Hence, the client device 300 may in embodiments receive the first data packet D1 and the second data packet D2 in a common slot or TTI of the first data channel 510 and the second data channel 512, respectively. Fig. 7 shows the concurrent transmission of the first data packet D1 and the second data packet D2 according to such an embodiment. In the embodiment shown in Fig. 7, a first slot S1 is common to the first data channel 510 and the second data channel 512. The first data packet D1 is transmitted in the first data channel 510 during the first slot S1 and the second data packet D2 is transmitted in the second data channel 512 during the first slot S1. Although the transmission of the first data packet D1 and the second data packet D2 is shown to occur within the first slot S1 in Fig. 7, the transmission of the first data packet D1 and the second data packet D2 may in embodiments extend over more than one slot without deviating from the scope of the invention. Further, the first data packet D1 and the second data packet D2 can be transmitted in different OFDM symbols in the common slot, e.g. the first data packet D1 can be sent in OFDM symbols 3-8 and the second data packet D2 in OFDM symbols 9-14.

That the network access node 100 concurrently transmits the first data packet D1 and the second data packet D2 to the client device 300 may further mean that the network access node 100 transmits the first data packet D1 in the first data channel 510 in a first time period and transmit the second data packet D2 in the second data channel 512 in a second time period, where the first time period and the second time period at least partially overlap in time. Hence, the client device 300 may in embodiments receive the first data packet D1 in the first data channel 510 in a first time period and receive the second data packet D2 in the second data channel 512 in a second time period, where the first time period and the second time period at least partially overlap in time. Fig. 8 shows the concurrent transmission the first data packet D1 and the second data packet D2 according to such an embodiment. In the embodiment shown in Fig. 8, the first data packet D1 is transmitted in the first data channel 510 in a first time period P1 and the second data packet D2 is transmitted in the second data channel 512 in a second time period P2. As shown in Fig. 8, the first time period P1 and the second time period P2 partially overlap in time.

As described above, the control message 502 comprises a first control information 504 associated with a first data channel 510 and a second control information 506 associated with a second data channel 512. According to embodiments of the invention the first control information 504 and the second control information 506 are data channel configuration information, i.e. information allowing the client device 300 to detect the data channel. The data channel configuration information may be at least one of frequency resource, time resource, code resource, redundancy version, modulation and coding scheme, transport block, and bandwidth part allocation.

In embodiments of the invention, the first control information 504 may comprise more bits than the second control information 506. In other words, the total number of bits of the first control information 504 and the second control information 506 may be less than two times the number of bits of the first control information 504. In such embodiments, the second control information 506 may be derivable from the first control information 504. In other words, the client device 300 may be configured to derive the second control information 506 from the first control information 504. The second control information 506 may e.g. be derivable from the first control information 504 in dependence on an offset value. Furthermore, the second control information 506 may be derivable from the first control information 504 in dependence on a look up table. Hence, the client device 300 may be configured to derive the second control information 506 from the first control information 504 in dependence on an offset value and/or a look up table.

For example, the resource allocation for the second data channel 512 may be restricted and related to the resource allocation for the first data channel 510. Hence, the first control information 504 may indicate a resource allocation for the first data channel 510, while the second control information 506 may indicate information from which the resource allocation for the second data channel 512 may be derived from the resource allocation for the first data channel 510. The second control information 506 may e.g. comprise an offset value expressed in frequency, e.g. in resource blocks. The offset value may correspond to the offset of the second data channel 512 from the first data channel 510, or from some reference point, e.g. the mid or end frequencies for the configured bandwidth part.

Furthermore, the resource allocation for the second data channel 512 may e.g. be mirrored to the resource allocation for the first data channel 510. The mirroring may be based on a pre-configured rule, or a rule signaled via high layer signaling, such as RRC signaling, to the client device the latter case implying semi-static configuration. In this case, no extra bits are needed to indicate the resource allocation for the second data channel 512. The mirroring may further be defined by one or more bits using a bitmap, where each bitmap comprises a pre-defined mirroring between the resource allocation for the first data channel 510 and the resource allocation for the second data channel 512. In embodiments, a look-up table may be used to define the mapping between the bitmap and the mirroring used.

According to embodiments of the invention, the control message 502 may further comprise a third control information 508 associated with the first data channel 510 and the second data channel 512. Third control information 508 may be common to both the first data channel 510 and the second data channel 512. Thereby, the control message 502 can be made more compact. The third control information 508 may e.g. comprise information such as carrier indicator, VRB-to-PRB mapping, or rate matching indicator.

According to embodiments of the invention, the control message 502 is a single DCI comprising a plurality of fields, and the first control information 504 and the second control information 506 are comprised in the same field. The single DCI may in such embodiments be a new DCI format or an existing DCI format. When an existing DCI format is used, the bits of one or more existing fields in the DCI format may be reused for both the first control information 504 and the second control information 506. For example, if the DCI format 1_1 in NR is used, the transport block information fields may be used. In this case, the fields corresponding to two different transport blocks of the same data channel may be used to point to two different transport blocks of the first data channel 510 and the second data channel 512, respectively. Furthermore, the first control information 504 and the second control information 506 may be comprised in the redundancy version field of the DCI format 1_1. Currently, in DCI format 1_1, the redundancy version field comprises two bits which may indicate four different redundancy versions. In embodiments, the two bits of the redundancy version field may instead be used to indicate the data channel and the redundancy version, as shown in table 1. Thus, one of two redundancy versions RV0, RV1 may be indicated for each first and second data channels 510, 512 according to the bit map shown in table 1.

**Table 1.**

| **RV bitfield** | |
|---|---|
| 00 | 510, RV 0 |
| 01 | 510, RV 1 |
| 10 | 512, RV 0 |
| 11 | 512, RV 1 |

When using an existing data field in an existing DCI format for the first control information 504 and the second control information 506, a higher layer parameter (e.g. a RRC parameter) may be used to indicate to the client device 300 how to interpret the respective data field in the DCI format. Table 2 shows an example of such a higher layer parameter "DCI_Multiple_DCI" when the redundancy version field is reused according to table 1.

**Table 2.**

| **DCI field** | **# bits** |
|---|---|
| Identifier for DCI formats | - |
| Frequency domain resource assignment | - |
| Time domain resource assignment | - |
| Modulation and coding scheme | - |
| New data indicator | - |
| Redundancy version | **2 bits, if "DCI_Multiple_DCI=0, else see table 1 above** |
| HARQ process number | - |
| Downlink assignment index, as counter DAI | - |
| TPC command for scheduled PUCCH | - |
| PUCCH resource indicator | - |
| PDSCH-to-HARQ_feedback timing indicator | - |
| Total payload size | - |

In embodiments of the invention, the time and/or frequency resource indication field of the DCI can be mapped to point to both the first data channel 510 and the second data channel 512. For example, bit 0 to 4 of the time and/or frequency resource indication field may be used to indicate the time and/or frequency resources for the first data channel 510 and bit 5 to 9 of the time and/or frequency resource indication field may be used to indicate the time and/or frequency resources for the second data channel 512. As described above, a higher layer parameter may be used to indicate to the client device 300 how to interpret the time and/or frequency resource indication field in the DCI format.

According to embodiments of the invention, the first control information 504 and the second control information 506 may be comprised in different fields instead of in the same field. Hence, when the control message 502 is a single DCI comprising a plurality of fields, the first control information 504 and the second control information 506 may in embodiments be comprised in different fields. In other words, the first control information 504 may be included in at least one first information field and the second control information 506 may be included in at least one second information field. A DCI format according to such an embodiment is shown in table 3.

**Table 3.**

| **DCI field** | **# bits** |
|---|---|
| Identifier for DCI formats | 1 |
| Frequency domain resource assignment, first data channel 510 (new) | **x** |
| Frequency domain resource assignment, second data channel 512 (new) | **y (y<x)** |
| Time domain resource assignment | 1,2,3,4 |
| Modulation and coding scheme, first data channel 510 (new) | **z0** |
| Modulation and coding scheme, second data channel 512 (new) | **z1 (z1<z0)** |
| New data indicator | 1 |
| Redundancy version, first data channel 510 (new) | **2** |
| Redundancy version, second data channel 512 (new) | **2** |
| HARQ process number | 4 |
| Downlink assignment index, as counter DAI | 0,2,4 |
| TPC command for scheduled PUCCH | 2 |
| PUCCH resource indicator | 2 |
| PDSCH-to-HARQ_feedback timing indicator | 0,1,2,3 |
| Total payload size | - |

The DCI format shown in table 3 comprises new information fields for frequency resource assignment, modulation and coding scheme (MCS), and redundancy version for the second data channel 512. In the embodiment shown in table 3, the frequency resource assignment field for the second data channel 512 comprises fewer bits than the frequency resource assignment field for the first data channel 510. The frequency resource assignment field for the second data channel 512 may e.g. be expressed as an offset from the frequency resource assignment field for the first data channel 510. Furthermore, the MCS field for the second data channel 512 comprises fewer bits than the MCS field for the first data channel 510. The MCS for the second data channel 512 may e.g. be expressed as an offset from the MCS for the first data channel 510. For example, the MCS for the second data channel 512 may comprise three bits, while the MCS for the first data channel 510 comprise five bits. Two of the three bits may indicate four different MCS offset steps and the remaining bit may indicate if the offset is plus or minus the MSC for the first data channel 510. The remaining information fields may be valid for both the first data channel 510 and the second data channel 512. These information fields may correspond to the previously described third control information 508.

The client device 300 herein, may be denoted as a user device, a User Equipment (UE), a mobile station, an internet of things (IoT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in this context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

The network access node 100 herein may also be denoted as a radio network access node, an access network access node, an access point, or a base station, e.g. a Radio Base Station (RBS), which in some networks may be referred to as transmitter, "gNB", "gNodeB", "eNB", "eNodeB", "NodeB" or "B node", depending on the technology and terminology used. The radio network access node may be of different classes such as e.g. macro eNodeB, home eNodeB or pico base station, based on transmission power and thereby also cell size. The radio network access node can be a Station (STA), which is any device that contains an IEEE 802.11-conformant Media Access Control (MAC) and Physical Layer (PHY) interface to the Wireless Medium (WM). The radio network access node may also be a base station corresponding to the fifth generation (5G) wireless systems.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the network access node 100 and the client device 300 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the network access node 100 and the client device 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Further embodiments of the present invention are provided in the following. I t should be noted that the numbering used in the following section does not necessarily need to comply with the numbering used in the previous sections.

Embodiment 1. A network access node (100) for a wireless communication system (500), the network access node (100) being configured to
transmit a control message (502) to a client device (300), wherein the control message (502) comprises a first control information (504) associated with a first data channel (510) and a second control information (506) associated with a second data channel (512), wherein the first data channel (510) and the second data channel (512) do not overlap in frequency;
concurrently transmit a first data packet (D1) in the first data channel (510) and a second data packet (D2) in the second data channel (512) to the client device (300).

Embodiment 2. The network access node (100) according to claim 1, wherein concurrently transmit the first data packet (D1) and the second data packet (D2) to the client device (300) comprises
transmit the first data packet (D1) and the second data packet (D2) in a common slot of the first data channel (510) and the second data channel (512), respectively.

Embodiment 3. The network access node (100) according to claim 1 or 2, wherein concurrently transmit the first data packet (D1) and the second data packet (D2) to the client device (300) comprises
transmit the first data packet (D1) in the first data channel (510) in a first time period and transmit the second data packet (D2) in the second data channel (512) in a second time period, wherein the first time period and the second time period at least partially overlap in time.

Embodiment 4. The network access node (100) according to any of the preceding claims, wherein the first control information (504) comprises more bits than the second control information (506).

Embodiment 5. The network access node (100) according to claim 4, wherein the second control information (506) is derivable from the first control information (504).

Embodiment 6. The network access node (100) according to claim 5, wherein the second control information (506) is derivable from the first control information (504) in dependence on an offset value.

Embodiment 7. The network access node (100) according to claim 5 or 6, wherein the second control information (506) is derivable from the first control information (504) in dependence on a look up table.

Embodiment 8. The network access node (100) according to any of the preceding claims, wherein the control message (502) is a single downlink control information comprising a plurality of fields, and wherein the first control information (504) and the second control information (506) are comprised in the same field.

Embodiment 9. The network access node (100) according to any of the preceding claims, wherein the control message (502) is a single downlink control information comprising a plurality of fields, and wherein the first control information (504) and the second control information (506) are comprised in different fields.

Embodiment 10. The network access node (100) according to any of the preceding claims, wherein the first control information (504) and the second control information (506) are data channel configuration information.

Embodiment 11. The network access node (100) according to claim 10, wherein the data channel configuration information is at least one of frequency resource, time resource, code resource, redundancy version, modulation and coding scheme, transport block, and bandwidth part allocation.

Embodiment 12. The network access node (100) according to any of the preceding claims, wherein the control message (502) further comprises a third control information (508) associated with the first data channel (510) and the second data channel (512).

Embodiment 13. The network access node (100) according to any of the preceding claims, wherein the first data packet (D1) and the second data packet (D2) comprises the same information content.

Embodiment 14. A client device (300) for a wireless communication system (500), the client device (300) being configured to
receive a control message (502) from a network access node (100), wherein the control message (502) comprises a first control information (504) associated with a first data channel (510) and a second control information (506) associated with a second data channel (512), wherein the first data channel (510) and the second data channel (512) do not overlap in frequency;
concurrently receive a first data packet (D1) in the first data channel (510) and a second data packet (D2) in the second data channel (512) from the network access node (100).

Embodiment 15. The client device (300) according to claim 14, configured to
decode the first data channel (510) according to the first control information and decode the second data channel (512) according to the second control information so as to obtain the first data packet (D1) and the second data packet (D2), respectively.

Embodiment 16. The client device (300) according to claim 14 or 15, wherein concurrently receive the first data packet (D1) and the second data packet (D2) from the network access node (100) comprises
receive the first data packet (D1) and the second data packet (D2) in a common slot of the first data channel (510) and the second data channel (512), respectively.

Embodiment 17. The client device (300) according to any of claims 14 to 16, wherein concurrently receive the first data packet (D1) and the second data packet (D2) from the network access node (100) comprises
receive the first data packet (D1) in the first data channel (510) in a first time period and receive the second data packet (D2) in the second data channel (512) in a second time period, wherein the first time period and the second time period at least partially overlap in time.

Embodiment 18. The client device (300) according to any of claims 14 to 17, wherein the first control information (504) comprises more bits than the second control information (506).

Embodiment 19. The client device (300) according to claim 18, configured to
derive the second control information (506) from the first control information (504).

Embodiment 20. The client device (300) according to claim 19, configured to
derive the second control information (506) from the first control information (504) in dependence on an offset value.

Embodiment 21. The client device (300) according to claim 19 or 20, configured to
derive the second control information (506) from the first control information (504) in dependence on a look up table.

Embodiment 22. The client device (300) according to any of claims 14 to 21, wherein the control message (502) is a single downlink control information comprising a plurality of fields, and wherein the first control information (504) and the second control information (506) are comprised in the same field.

Embodiment 23. The client device (300) according to any of claims 14 to 22, wherein the control message (502) is a single downlink control information comprising a plurality of fields, and wherein the first control information (504) and the second control information (506) are comprised in different fields.

Embodiment 24. The client device (300) according to any of claims 14 to 23, wherein the first control information (504) and the second control information (506) are data channel configuration information.

Embodiment 25. The client device (300) according to claim 24, wherein the data channel configuration information is at least one of frequency resource, time resource, code resource, redundancy version, modulation and coding scheme, transport block, and bandwidth part allocation.

Embodiment 26. The client device (300) according to any of claims 14 to 25, wherein the control message (502) further comprises a third control information (508) associated with the first data channel (510) and the second data channel (512).

Embodiment 27. The client device (300) according to any of claims 14 to 26, wherein the first data packet (D1) and the second data packet (D2) comprises the same information content.

Embodiment 28. A method (200) for a network access node (100), the method (200) comprising
transmitting (202) a control message (502) to a client device (300), wherein the control message (502) comprises a first control information (504) associated with a first data channel (510) and a second control information (506) associated with a second data channel (512), wherein the first data channel (510) and the second data channel (512) do not overlap in frequency;
concurrently transmitting (204) a first data packet (D1) in the first data channel (510) and a second data packet (D2) in the second data channel (512) to the client device (300).

Embodiment 29. A method (400) for a client device (100), the method (400) comprising
receiving (402) a control message (502) from a network access node (100), wherein the control message (502) comprises a first control information (504) associated with a first data channel (510) and a second control information (506) associated with a second data channel (512), wherein the first data channel (510) and the second data channel (512) do not overlap in frequency;
concurrently receiving (404) a first data packet (D1) in the first data channel (510) and a second data packet (D2) in the second data channel (512) from the network access node (100).

Embodiment 30. A computer program with a program code for performing a method according to claim 28 or 29 when the computer program runs on a computer.

Finally, it should be understood that the invention is not limited to the embodiments described above, but also relates to and incorporates all embodiments within the scope of the appended independent claims.

## Claims

1. A method (200) for a network access node (100), the method (200) comprising
transmitting (202) a control message (502) to a client device (300), wherein the control message (502) comprises a first control information (504) associated with a first data channel (510) and a second control information (506) associated with a second data channel (512), wherein the first data channel (510) and the second data channel (512) do not overlap in frequency;
concurrently transmitting (204) a first data packet, D1, in the first data channel (510) and a second data packet, D2, in the second data channel (512) to the client device (300).

2. The method (200) according to claim 1, wherein concurrently transmitting (204) a first data packet, D1, in the first data channel (510) and a second data packet, D2, in the second data channel (512) to the client device (300) comprises
transmitting the first data packet, D1, and the second data packet, D2, in a common slot of the first data channel (510) and the second data channel (512), respectively.

3. The method (200) according to claim 1 or 2, wherein concurrently transmitting (204) a first data packet, D1, in the first data channel (510) and a second data packet, D2, in the second data channel (512) to the client device (300) comprises
transmitting the first data packet, D1, in the first data channel (510) in a first time period and transmit the second data packet, D2, in the second data channel (512) in a second time period, wherein the first time period and the second time period at least partially overlap in time.

4. The method (200) according to any of the claims 1 to 3, wherein the first control information (504) comprises more bits than the second control information (506).

5. The method (200) according to claim 4, wherein the second control information (506) is derivable from the first control information (504).

6. The method (200) according to claim 5, wherein the second control information (506) is derivable from the first control information (504) in dependence on an offset value.

7. A method (400) for a client device (100), the method (400) comprising
receiving (402) a control message (502) from a network access node (100), wherein the control message (502) comprises a first control information (504) associated with a first data channel (510) and a second control information (506) associated with a second data channel (512), wherein the first data channel (510) and the second data channel (512) do not overlap in frequency;
concurrently receiving (404) a first data packet, D1, in the first data channel (510) and a second data packet, D2, in the second data channel (512) from the network access node (100).

8. The method (400) according to claim 7, further comprises
decoding the first data channel (510) according to the first control information and decoding the second data channel (512) according to the second control information so as to obtain the first data packet, D1, and the second data packet, D2, respectively.

9. The method (400) according to claim 7 or 8, wherein concurrently receiving (404) a first data packet, D1, in the first data channel (510) and a second data packet, D2, in the second data channel (512) from the network access node (100) comprises
receiving the first data packet, D1, and the second data packet, D2, in a common slot of the first data channel (510) and the second data channel (512), respectively.

10. The method (400) according to any of claims 7 to 9, wherein concurrently receiving (404) a first data packet, D1, in the first data channel (510) and a second data packet, D2, in the second data channel (512) from the network access node (100) comprises
receiving the first data packet, D1, in the first data channel (510) in a first time period and receiving the second data packet, D2, in the second data channel (512) in a second time period, wherein the first time period and the second time period at least partially overlap in time.

11. The method (400) according to any of claims 7 to 10, wherein the first control information (504) comprises more bits than the second control information (506).

12. The method (400) according to claim 11, further comprises
deriving the second control information (506) from the first control information (504).

13. A network access node (100), comprising:
means for performing the method according to any one of claims 1 to 6.

14. A client device (300), comprising:
means for performing the method according to any one of claims 7 to 12.

15. A computer program with a program code for performing a method according to any one of claims 1 to 6, or performing a method according to any one of claims 7 to 12 when the computer program runs on a computer.
